(19) Europäisches Patentamt / European Patent Office / Office européen des brevets

(11) **EP 2 151 953 A1**

(12) **EUROPEAN PATENT APPLICATION**

(43) Date of publication:
**10.02.2010 Bulletin 2010/06**

(51) Int Cl.:
*H04L 12/56* (2006.01)   *H04W 28/26* (2009.01)

(21) Application number: **09382136.1**

(22) Date of filing: **05.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **06.08.2008 ES 200802361**

(71) Applicants:
• **Vodafone Group PLC**
  **Newbury**
  **Berkshire RG14 2FN (GB)**
• **Vodafone España, S.A.U.**
  **28108 Alcobendas, Madrid (ES)**
  Designated Contracting States:
  **ES**

(72) Inventors:
• **De Pasqueale, Andrea**
  **28050 Madrid (ES)**
• **Dominiguez Romero, Francisco, Javier**
  **28050 Madrid (ES)**
• **Garriga-Muñiz, Beatriz**
  **28050 Madrid (ES)**

(74) Representative: **Carpintero Lopez, Francisco et al**
  **Herrero & Asociados, S.L.**
  **Alcalá 35**
  **28014 Madrid (ES)**

(54) **Method and system for allocating capacity in shared radio access networks**

(57)    Method and system for allocating capacity in shared radio access networks of wide area cellular telephone networks being shared by N mobile network operators, N ≥ 2, wherein allocation of an available bandwidth (1) on lub -or lur- interface to traffic from all the N operators comprises splitting the available bandwidth (1) of said interface into a number M = N+1 of allocation sets, one allocation set having a bandwidth pool (1 P) usable by any of the N operators for their traffic allocation, and each one of the remaining N allocation sets having bandwidth dedicated to traffic exclusively from one of the N operators. The traffic allocation to the bandwidth pool (1P) is First Comes First Served, while the traffic allocation in each allocation set dedicated to a determined mobile network operator of the N ones is performed by the specific interface handling algorithm provided by this operator when no sharing with the other operators is required.

FIG. 2

EP 2 151 953 A1

**Description**

**TECHNICAL FIELD OF THE INVENTION**

The present invention has its application within the telecommunications sector and, especially, in the industrial area engaged in providing access networks (e.g., UTRAN in UMTS) with elements of cellular infrastructures such as base stations (Nodes-B in UMTS) and controllers (Radio Network Controllers or RNC in UMTS) for wide area cellular telephone networks (i.e., 3G networks).

More particularly, the invention described herein relates to a method and system for the allocation of (bandwidth) capacity, when dimensioning of UTRAN links, among a plurality of mobile network operators sharing the access network of a wireless communications system which supports 3G or beyond 3G technologies (e.g., HSDPA, LTE, WiMax, etc.). Here, UTRAN links refers to lub links, i.e., between Nodes-B and the RNC, as well as lur links, i.e., between one RNC and another, excepting the on-air Uu interface and the lu which provides each operator with dedicated links and no sharing applies.

**BACKGROUND OF THE INVENTION**

UTRAN (UMTS Terrestrial Radio Access Network) is a collective term which includes the Radio Network Controller (RNC), the 3G base stations (Nodes-B) and the air interface to the User Equipment (UE). More particularly, Node-B and RNC are elements that make up the UMTS radio access network and communicate through determined interfaces. Node-B handles radio channels, including the multiplexing/demultiplexing of user voice and data information. RNC is responsible for controlling and managing the multiple base stations (Nodes-B) including the utilization of radio network services.

There are four interfaces connecting the UTRAN internally or externally to other functional entities: lu, Uu, lub and lur. lu and Uu are external interfaces, the lu interface connecting the RNC to the Core Network and the Uu interface connecting the Node-B with the UE.

In particular, lub is an internal interface which constitutes a logical connection between the Node-B and RNC, and physically lub can be carried over multiple T1/E1 links from each Node-B aggregated to one or several ATM STM-1 (OC-3) links or one STM-4 link. More specifically, lub constitutes the Node-B Application Part (NBAP) defined by the 3GPP specification TS 25.433 providing UTRAN specific signaling and control for the following sample areas:

- Management of common channels, common resources, and radio links
- Configuration management, such as cell configuration management
- Measurement handling and control
- Reporting of error situations

UTRAN dimensioning task involves determining how much bandwidth or capacity is necessary for the lub interface to support a specific traffic load to satisfy the required Quality of Service (QoS).

UTRAN sharing is a technique in which a plurality (two or more) of mobile network operators (MNO) achieve reduction in CAPEX and OPEX costs by sharing part of the access network elements: in particular, the RNCs, the Nodes-B and the lub resources allocated to carry voice and data from the RNCs to the Nodes-B. Currently, "active" sharing, as opposed to "passive" sharing, is the commercial technique most commonly used by the supplier community providing UTRAN sharing systems. In active sharing each MNO fully shares the equipments, and this involves sharing Node-B and RNC base-band and their processing capabilities (thereby, reducing CAPEX), with the other MNOs but each one operates the network over independent 3G carriers.

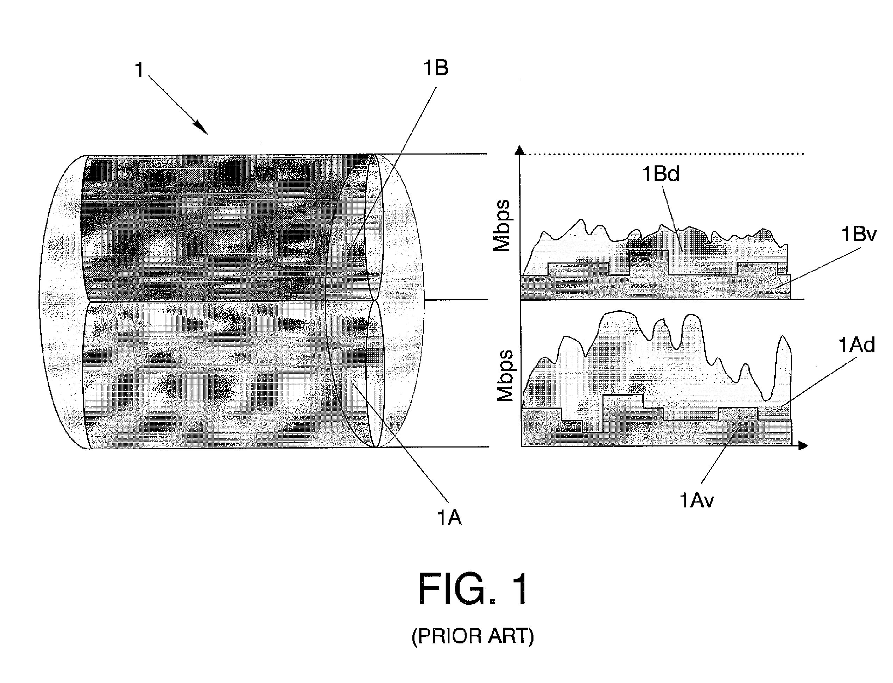

Figure 1 illustrates an example of a commercial implementation of UTRAN sharing in which all the resources are fully shared between operators: In the shown case, for a scenario with two different MNOs, lub capacity (1) is split into two partitions (1 A, 1 B) in both downlink and uplink. Each partition is fully dedicated to carry user traffic, such as voice and/or data packets, as well as control information, from one of the MNOs, that is, a partition allocated to one operator is unshared by the other operator. The whole lub capacity (1) is partitioned and the size of each partition, defined in Mbps, is in accordance to sharing agreements between the MNOs. The graphics show the use of the bandwidth allocated to each operator's partition for voice (1Av, 1 Bv) and data packets (1Ad, 1 Bd). Here the UTRAN sharing functions are physically shared but logically split into two UTRAN for the two different MNOs, each having their own PLMN, fault management, performance management and configuration management capabilities, and moreover retains the ability to deploy features unique to each network. By splitting a physical UTRAN into different logical UTRANs, multiple operators are able to cover the same area with their own frequency with a single physical UTRAN.

The existing UTRAN sharing solutions allows for all UTRAN elements to be physically shared. However, with special reference to the lub interface, which is one of the most critical system bottlenecks in today's 3G networks, most of the resource allocation algorithms for UTRAN sharing used in lub simply assign the resources to the traffic that first demands transport resources (First Comes, First Served), irrespective from which operator the traffic comes. Since in the sharing areas, operators can have widely differing volumes of traffic to be transported over the lub due to a different customer base and set of offered services, the above allocation principle can easily lead to a biased lub resource allocation that prevents any commercial agreement between sharing operators from achieving the desired effect.

The lub traffic allocation is not efficient even when the available lub bandwidth is split into unshared parts between the two operators as in Figure 1; in this case there can be capacity not used in the system although not available to the operator that needs it.

The same problem exists with the lur interface, which can be considered as an internal interface for most of the network architectures, connecting two RNCs with each other.

In order to improve the lub (and lur) resource allocation in current shared 3G networks a new mechanism is presented as follows.

## SUMMARY OF THE INVENTION

The present invention aims to solve the aforesaid problem by splitting the UTRAN interface capacity (lub or lur bandwidth) into a number M = N+1, being N the number of different mobile network operators (MNO) sharing the UTRAN elements, so that N+1 partitions can be defined in the interface (lub or lur), here called capacity allocation sets (CAS), one of them being in pool among all the operators, whilst the other N partitions are dedicated to the traffic of each MNO.

The size of bandwidth allocated for each (of the N) dedicated CAS is configurable and must be higher than 0 Mbps up to the whole lub bandwidth minus the size of the other CAS, i.e., (N-1)CAS BW + Pooled CAS BW. The size of the pooled CAS, which is the actual bandwidth shared among all the operators and so available for any of them when needed, is also configurable and always bigger than 0 Mbps. Thus, when setting the sharing agreements among service providers or operators in order to perform UTRAN dimensioning, every MNO can use the traffic forecast information in order to choose and agree the most suitable size for each of the N+1 CAS. This guarantees that in every moment a minimum amount of capacity is available (in a dedicated CAS) to the forecasted traffic from each MNO (each MNO is assigned a CAS that cannot be used by the others).

Any existing UTRAN interface handling algorithms developed for the non-shared areas can be used inside every dedicated CAS, while the traffic allocation used in the pooled CAS is First Comes First Served , which means that the capacity is allocated to the first operator that asks for the use of the available bandwidth from the pooled CAS.

The present invention is defined for its application on UTRAN interfaces which are internal interfaces: lub and lur.

An aspect of the invention refers to a method for allocating capacity to (voice and/or data) traffic demand from a plurality of mobile network operators which share a single physical radio access network of a wide area cellular telephone network (UTRAN in UMTS), including allocating available bandwidth on lub (or lur) interface to traffic from all the mobile network operators sharing the UTRAN elements (there are N operators, N > 1). For this allocation, the method comprises splitting the available bandwidth of the interface into a plurality of allocation sets (CAS), having:

- one allocation set, with a bandwidth pool usable by any of the N mobile network operators for their traffic allocation (shared by all of them),
- and N allocation sets, each one with bandwidth dedicated to traffic exclusively from one of the N mobile network operators (unshared by the rest of the N-1 operators).

Additionally, this method comprises a step of checking whether there is enough capacity to be allocated and, in particular, this includes checking the lub interface in order to determine traffic congestion in the allocation sets. More specifically, the proposed method checks the bandwidth pool to determine whether there is free bandwidth enough for the traffic demand of a certain MNO and, if so, this method comprises performing an allocation of bandwidth from the bandwidth pool to the traffic belonging to said MNO.

Allocating of bandwidth to traffic from a given MNO (of the N MNOs) can be carried out by first checking the allocation set dedicated to the given MNO and if there is enough free bandwidth, traffic allocation is performed using this free bandwidth and applying the lub handling algorithms existing for the non-shared areas (for example, using traffic prioritization schemes). Where no free bandwidth is found to carry all the traffic from said given MNO, the shared allocation set is checked to determine whether there is bandwidth enough in the bandwidth pool for the unallocated traffic.

Another alternative is checking the bandwidth pool firstly (before checking the allocation set dedicated to the given MNO) in order to allocate bandwidth from this bandwidth pool by applying the FIFO principle to traffic from said MNO, if there is free bandwidth enough in the shared allocation set. Otherwise, the traffic pending to be allocated goes to free bandwidth of the allocation set dedicated to the given MNO, if such dedicated bandwidth is sufficient to carry it.

Another aspect of the invention deals with a system for allocating capacity in a shared radio access network (UTRAN) to traffic demand from a plurality of N mobile network operators (MNOs) in a wide area cellular telephone scenario (UMTS), the system comprising at least a first node and at least a second node capable of connecting each other through lub interface (one or both nodes can be a Node-B, or one of the nodes can be a RNC). In case that one of the nodes is a RNC, the following is also applicable to allocate capacity of the lur interface with another RNC node. Said nodes (Node-B and RNC) of the system comprise allocation means (for example, implemented on queues) configured for allocating the available lub bandwidth in accordance to the method described before, splitting the available lub bandwidth into N allocation sets (as number N of MNOs, each one with bandwidth dedicated to one MNO) plus one more allocation set with a bandwidth pool. Additionally, the nodes (Nodes-B or RNC) include checking means for determining whether there is free bandwidth in the bandwidth pool enough for traffic from one mobile network operator and, if so, the allocation means uses said bandwidth from the bandwidth pool.

Other aspects of the invention refer to two UTRAN elements: a 3G base station (i.e. Node-B) and a radio network controller (RNC) respectively, each of this UTRAN element comprising allocation means and, in an additional manner, checking means configured for performing the steps of traffic allocation and bandwidth checking in the allocation sets defined according to the method described before.

The present invention delivers an effective way for controlling traffic congestion on lub and lur interfaces and a more efficient solution for sharing bandwidth on those interfaces among operators/service providers.

## DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1. - shows a schematic representation of sharing lub bandwidth between two operators, having split it into two dedicated bandwidth partitions in accordance to the allocation technique defined in the prior art, and a graphical representation of the voice and data traffic allocated in each partition.

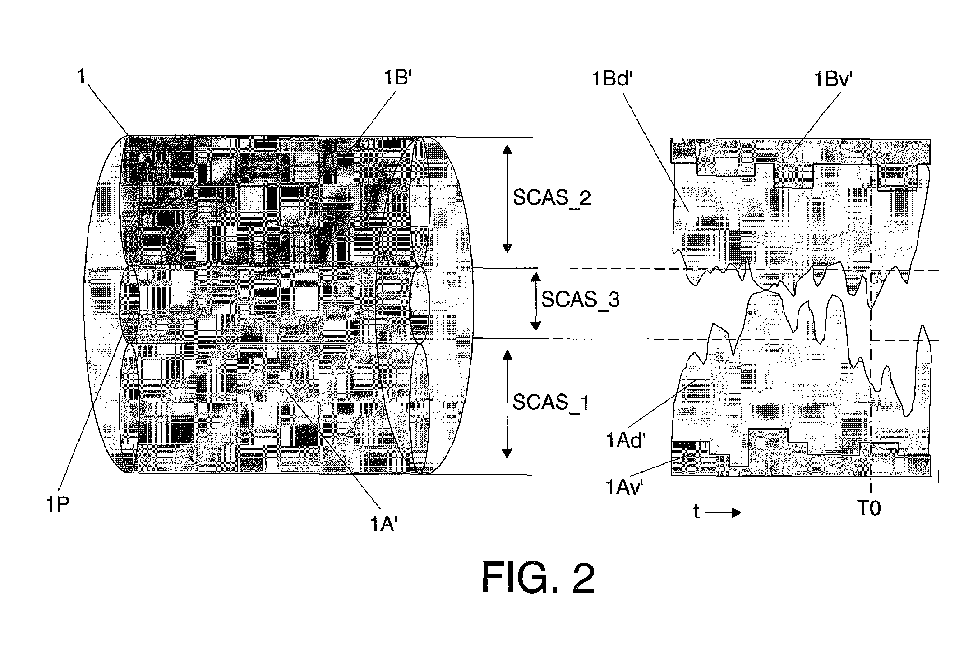

Figure 2. - shows a schematic representation of sharing lub bandwidth between two operators, having split it into two dedicated bandwidth partitions and a pooled one in accordance to a preferred embodiment of the invention, and a graphical representation of the voice and data traffic allocated in each partition.

## DETAILED DESCRIPTION OF THE INVENTION

Figure 2 illustrates how the available bandwidth (1) on lub interface is allocated to the traffic demand of a plurality of N mobile network operators, in the example N = 2, following a preferred embodiment of the invention: The available bandwidth (1) of lub interface, e.g. 6 Mbps, is split into 3 allocation sets: a shared one and two dedicated allocation sets or partitions (1 A', 1 B'), since there are N=2 operators. The shared allocation set has a bandwidth pool (1 P) which can be used to carry traffic from any of the two operators.

At any given instant (t), traffic utilization of each allocation set or CAS is measured. $TUCAS\_x$ (t) denotes the traffic utilization of the CAS numbered as x, where x ranges from 1 to N+1, being N the number of sharing operators, and the N+1 CAS refers in this example to the bandwidth pool (1 P).

Determining the size of each allocation set as $SCAS\_x$, the available bandwidth per each CAS is given by the following equation:

$$ABWCAS\_x(t) = TUCAS\_x (t) - SCAS\_x$$

The graphics shown in Figure 2 illustrates the utilization on the size of each CAS, $SCAS\_1$, $SCAS\_2$ -dedicated to operator 1 and to operator 2 respectively-and $SCAS\_3$ -of the bandwidth pool (1 P)- to voice traffic (1Av', 1 Bv') and data traffic (1Ad', 1 Bd') from each of the two operators in the example.

At any given time (t), a request of free bandwidth from the lub performed by the MNO number x is denoted as $NCR\_x$ (t), and any request for resources from the bandwidth pool (1 P) performed by any MNO is denoted as RPOOL (t).

An implementation option of traffic allocation on the lub is using always first the dedicated CAS "x" for the MNO "x". In this case, the allocation algorithm works as follows at a given moment in time, being current time = T0:

```
RPOOL (T0) = 0
For x from 1 to N:
```

```
If NCR_x (T0) < ABWCAS_x (T0),
    Then ABWCAS_x (T0) is decreased by NCR_x (T0);
Else
    ABWCAS_x (T0) = 0
    And
    RPOOL (T0) is increased by (NCR_x (T0) -
    ABWCAS_x (T0))
```

After allocating free bandwidth from the dedicated CAS "x", ABWCAS_x, to the given traffic from the MNO "x", for all "x" from 1 to N, and if more bandwidth is required for allocating traffic demand, a request to the bandwidth pool (1 P) and checking for free bandwidth are performed. That is, RPOOL (T0) is compared with ABWCAS_N+1 (T0) and:

$$IF\ (ABWCAS\_N+1\ (T0)) \geq (RPOOL\ (T0))$$

the remaining traffic of the operators is allocated to ABWCAS_N+1 (T0) from the bandwidth pool (1 P)
otherwise this remaining traffic is refused.

Traffic allocation to ABWCAS_N+1 (T0) follows the First Comes First Served principle, that is, the available bandwidth is allocated to the first operator asking for the use of the bandwidth pool (1P).

In case multiple operators make requests for bandwidth from the bandwidth pool (1P), the First operator Coming and subsequent operators are randomly selected amongst all the operators. After the capacity request from the selected operator is satisfied, other operators can try to use the pool as long as there is some capacity left: (ABWCAS_N+1 (T0)) ≥ (RPOOL (T0)).

An alternative implementation of traffic allocation on the lub is always to use the bandwidth pool (1 P) of the N+1 CAS first, checking whether (ABWCAS_N+1 (T0)) > (RPOOL (T0)), and if traffic from the MNO "x" remains without allocation to available bandwidth of said N+1 CAS, this remaining traffic is allocated to ABWCAS_x (T0), if NCR_x (T0) ≤ ABWCAS_x (T0); otherwise, the remaining traffic of the MNO "x" is refused.

The terms in which this specification has been worded are always to be taken in the broadest sense and not restrictively.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. Method for allocating capacity in shared radio access networks of wide area cellular telephone networks, the access network being shared by a number N of mobile network operators, N ≥ 2, the method comprising allocating an available bandwidth (1) on an UTRAN internal interface to traffic from all the N mobile network operators and **characterized by** splitting the available bandwidth (1) of the UTRAN internal interface into a number M = N+1 of allocation sets, one of said allocation sets having a bandwidth pool (1 P) usable by any of the N mobile network operators for their traffic allocation, and each one of the remaining N allocation sets having bandwidth dedicated to traffic exclusively from a respective one of the N mobile network operators.

2. Method according to claim 1, further comprising checking the bandwidth pool (1 P) to determine whether there is enough free bandwidth for traffic from one mobile network operator and, if so, allocating bandwidth from the bandwidth pool (1 P) to traffic from said mobile network operator.

4. Method according to claim 3, wherein said checking of the bandwidth pool (1 P) is performed before allocating bandwidth from the allocation set dedicated to said mobile network operator.

5. Method according to claim 3, wherein said checking of the bandwidth pool (1P) is performed after allocating all bandwidth from the allocation set dedicated to said mobile network operator.

6. System for allocating capacity in shared radio access networks of wide area cellular telephone networks, the access network being shared by a number N of mobile network operators, N ≥ 2, the system comprising at least a first node and at least a second node capable of connecting each other through an UTRAN internal interface which has an available bandwidth (1) for traffic from all the N mobile network operators, and **characterized in that** both the, at least one, first node and the, at least one, second node comprise allocation means configured for splitting the available bandwidth (1) of the UTRAN internal interface into a number M = N+1 of allocation sets, one allocation set having a bandwidth pool (1 P) usable by any of the N mobile network operators for their traffic allocation, and each one of the remaining N allocation sets having bandwidth dedicated to traffic exclusively from a respective one of the N mobile network operators.

**7.** System according to claim 6, wherein the UTRAN internal interface is lub, and both the first node and the second node are third generation base stations.

**8.** System according to claim 6, wherein the UTRAN internal interface is lub, the first node is a third generation base station and the second node is a radio network controller.

**9.** System according to claim 6, wherein the UTRAN internal interface is lur, and both the first node and the second node are radio network controllers.

**10.** System according to any of claims 6-9, wherein both the first node and the second node further comprise checking means for determining whether there is enough free bandwidth in the bandwidth pool (1 P) for traffic from one mobile network operator and wherein the allocation means are configured for allocating bandwidth from the bandwidth pool (1 P) to traffic from said mobile network operator, if there is enough free bandwidth in the bandwidth pool (1P).

**11.** Third generation base station **characterized by** comprising allocation means configured for splitting the available bandwidth (1) of lub interface into a number M = N+1 of allocation sets, one allocation set having a bandwidth pool (1 P) usable by any of the N mobile network operators for their traffic allocation, and each one of the remaining N allocation sets having bandwidth dedicated to traffic exclusively from a respective one of the N mobile network operators.

**12.** Third generation base station according to any of claim 11, further comprising checking means for determining whether there is enough free bandwidth in the bandwidth pool (1 P) for traffic from one mobile network operator, wherein the allocation means are configured for allocating bandwidth from the bandwidth pool (1 P) to traffic from said mobile network operator, if there is enough free bandwidth in the bandwidth pool (1P).

**13.** Radio network controller **characterized by** comprising allocation means configured for splitting the available bandwidth (1) of lub interface into a number M = N+1 of allocation sets, one allocation set having a bandwidth pool (1 P) usable by any of the N mobile network operators for their traffic allocation, and each one of the remaining N allocation sets having bandwidth dedicated to traffic exclusively from a respective one of the N mobile network operators.

**14.** Radio network controller **characterized by** comprising allocation means configured for splitting the available bandwidth (1) of lur interface into a number M = N+1 of allocation sets, one allocation set having a bandwidth pool (1 P) usable by any of the N mobile network operators for their traffic allocation, and each one of the remaining N allocation sets having bandwidth dedicated to traffic exclusively from a respective one of the N mobile network operators.

**15.** Radio network controller according to any of claims 13-14, further comprising checking means for determining whether there is enough free bandwidth in the bandwidth pool (1 P) for traffic from one mobile network operator, wherein the allocation means are configured for allocating bandwidth from the bandwidth pool (1 P) to traffic from said mobile network operator, if there is enough free bandwidth in the bandwidth pool (1P).

FIG. 1

(PRIOR ART)

EP 2 151 953 A1

FIG. 2

EP 2 151 953 A1

**EUROPEAN SEARCH REPORT**

Application Number

EP 09 38 2136

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 443 790 A (NOKIA CORP [FI]) 4 August 2004 (2004-08-04) <br> * abstract * <br> * figure 1 * <br> * figure 6 * <br> * column 2, paragraph 8 - column 4, paragraph 20 * <br> * column 4, paragraph 17 * <br> * column 5, paragraph 25 - column 8, paragraph 36 * <br> ----- | 1-15 | INV. <br> H04L12/56 <br> H04W28/26 |
| A | US 2006/056373 A1 (LEGG PETER J [GB]) 16 March 2006 (2006-03-16) <br> * abstract * <br> * page 1, paragraph 1 - page 2, paragraph 15 * <br> * page 4, paragraph 50 - paragraph 59 * <br> * page 5, paragraph 75 - page 6, paragraph 89 * <br> * page 9, paragraph 144 - page 10, paragraph 152 * <br> ----- | 1-15 | |
| | | | TECHNICAL FIELDS SEARCHED (IPC) |
| A | WO 2004/004398 A (NOKIA CORP [FI]; PELTOLA JUKKA [FI]; POSTI HARRI [FI]; REPONEN KARI [F]) 8 January 2004 (2004-01-08) <br> * abstract * <br> * page 2, line 22 - page 3, line 10 * <br> * page 5, line 15 - page 7, line 22 * <br> ----- | 1-15 | H04L <br> H04Q <br> H04W |
| | -/-- | | |

The present search report has been drawn up for all claims

| Place of search | Date of completion of the search | Examiner |
|---|---|---|
| Munich | 30 October 2009 | Avilés Martinez, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 38 2136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Digital cellular telecommunications system (Phase 2+); Universal Mobile Telecommunications System (UMTS); Service aspects and requirements for network sharing (3GPP TR 22.951 version 7.0.0 Release 7); ETSI TR 122 951" ETSI STANDARDS, LIS, SOPHIA ANTIPOLIS CEDEX, FRANCE, vol. 3-SA1, no. V7.0.0, 1 June 2007 (2007-06-01), XP014037481 ISSN: 0000-0001 * page 4, paragraph INTRODUCTION * * page 5, paragraphs NETWORK SHARING,SCENARIOS - page 9 * ----- | 1-15 | |

TECHNICAL FIELDS
SEARCHED      (IPC)

The present search report has been drawn up for all claims

| Place of search | Date of completion of the search | Examiner |
|---|---|---|
| Munich | 30 October 2009 | Avilés Martinez, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 38 2136

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2009

| Patent document cited in search report | | Publication date | Patent family member(s) | | Publication date |
|---|---|---|---|---|---|
| EP  1443790 | A | 04-08-2004 | CN<br>US | 1612637  A<br>2004176075 A1 | 04-05-2005<br>09-09-2004 |
| US 2006056373 | A1 | 16-03-2006 | NONE | | |
| WO 2004004398 | A | 08-01-2004 | AU<br>US | 2002314429 A1<br>2006094434 A1 | 19-01-2004<br>04-05-2006 |

For more details about this annex : see Official Journal of the European Patent Office, No. 12/82